# EUROPEAN PATENT SPECIFICATION

(11) **EP 3 620 702 B1**
(45) Date of publication and mention of the grant of the patent: **05.10.2022**
(21) Application number: 19191604.8
(22) Date of filing: 13.08.2019
(51) Int. Cl.: F16L 5/02

(54) **PIPE SUPPORT**
ROHRHALTER
SUPPORT DE TUYAU

(30) Priority: 05.09.2018 GB 201814439
(43) Date of publication of application: 11.03.2020
(73) Proprietor: Airbus Operations Limited, Bristol BS34 7PA (GB)
(72) Inventor: QUAYLE, Stuart, Bristol BS34 7PA (GB); BONTE, Eric, Bristol BS34 7PA (GB); BRYANT, Anthony, Bristol BS34 7PA (GB); PEACHEY, Daniel, Bristol BS34 7PA (GB)
(74) Representative: Ribeiro, James Michael

(56) References cited:
- US-A1- 2010 059 939
- US-A1- 2017 036 750
- US-B2- 9 920 859

## Description

### FIELD OF THE INVENTION

The present invention relates to a pipe support, an aircraft assembly including the pipe support, a fixed wing aircraft including the aircraft assembly, and a method of assembling a pipe with an aircraft structural member.

### BACKGROUND OF THE INVENTION

Aircraft wing boxes can be provided with fluid conduits, such as fuel conduits, that extend through openings in structural supports, such as ribs.

Conduit supports are used to attach the fluid conduits to the structural supports. Such conduit supports are typically attached using threaded fasteners, such as nuts and bolts which are complicated and time consuming to install.

One approach is to mount pipe connectors to either side of an opening in a rib. Individual pipe sections are joined between the connectors on adjacent ribs to form the fluid conduit. The pipe connectors act as conduit supports. Such an approach is time consuming and complex.

Another approach is to mount a pair of support plates on either side of the pipe and mount them to the rib using bolts or rivets. US9920859 B2 describes a pass-through mounting assembly for supporting tubing, such as fuel lines within aircraft wing fuel tanks.

### SUMMARY OF THE INVENTION

According to the present invention, there is provided an aircraft assembly comprising a fluid pipe, a wing rib defining a rib plane and having an opening, wherein the fluid pipe extends through the rib plane and through the opening, and a pipe support comprising a first part and a second part which together form a collar configured to retain the pipe, the pipe support being movable between an open condition, in which the pipe is insertable between the first and second parts, and a closed condition, in which the first and second parts are brought together to retain the pipe, wherein at least part of the collar is configured to be disposed in the opening in the wing rib so that the pipe support is restricted from moving from the closed condition, and wherein the pipe support supports the fluid pipe in the opening.

With such an arrangement, it is possible to straightforwardly mount a pipe support, and so simply support a pipe at a structural member, such as a wing rib, with a minimum of components. The above arrangement, helps to restrict the need to provide fasteners to restrict the first and second parts from being separated. As such, the pipe support makes use of the opening in the structural member through which the pipe extends to retain the pipe support in a closed condition. The need for additional openings in the support member is minimised.

The pipe support helps to minimise excessive tolerances, and reduce abrasive contact.

The pipe support may be configured to clamp the pipe between the first and second parts.

The pipe support may have a clamshell arrangement.

The pipe support may comprise a hinge about which the first part and the second part are separable.

With such an arrangement, it is possible to simplify assembly of the pipe support with the pipe. For example, a one-handed assembly operation is possible.

The pipe support may comprise a flange on the collar.

The flange may be configured to abut against the structural member to limit movement of the pipe support in a longitudinal axial direction of the pipe when the collar is in the opening.

The flange may comprise a first flange portion on the first part and a second flange portion on the second part.

The flange may extend circumferentially about the collar.

The pipe support may comprise a bayonet fitting.

As such, it is possible to provide a simple mounting means.

The bayonet fitting may comprise a bayonet tab configured to be inserted through a corresponding slot of the opening in the structural member, and to abut against the structural member upon rotation of the pipe support when the at least part of the collar is in the opening, so that a portion of the structural member is engaged between the flange and the bayonet tab.

The bayonet tab may be a first bayonet tab, and the bayonet fitting may comprise at least one second bayonet tab.

The first bayonet tab may have a different profile to the at least one second bayonet tab. Such an arrangement helps to ensure that the pipe support is orientated in a specific orientation with respect to the structural member when disposing the collar in the opening.

The pipe support may comprise a stop configured to limit rotation of the at least part of the collar in the opening.

The pipe support may comprise a fixing configured to fix the pipe support with the structural member to prevent rotation of the pipe support in the opening when the at least part of the collar is in the opening.

The pipe support may comprise a flange seal on the flange.

The flange seal may be a circumferentially extending flange seal.

A maximum radial length of the or each bayonet tab may be less than the radial distance of the circumferentially extending seal.

The flange seal may be electrically conductive to provide a conductive path between the pipe support and the structural member. As such an electrical bond may be provided to ensure an electrical path without a need for separate bonding leads, and to reduce any associated preparation.

The pipe support may comprise a collar seal on the collar.

The collar seal may be electrically conductive to provide a conductive path between the pipe and the pipe support. As such an electrical bond may be provided to ensure an electrical path without a need for separate bonding leads, and to reduce any associated preparation.

The pipe support may be electrically conductive.

The pipe support may be electrically isolating.

The pipe may have a cross-section that is uninterrupted as the pipe extends through each rib.

The pipe may be configured to carry fuel.

According to an aspect of the present invention, there is provided a fixed wing aircraft comprising the aircraft assembly as set out above.

According to the present invention, there is provided a method of supporting a pipe on a wing rib of an aircraft, the method comprising the steps:
disposing a pipe through an opening in the wing rib, inserting the pipe between a first part and a second part of a pipe support in an open condition, moving the pipe support into a closed condition in which the first and second parts are brought together to form a collar with the pipe retained by the collar, and disposing the collar in an opening in the wing rib so that the first and second parts are restricted from moving from the closed condition.

### BRIEF DESCRIPTION OF THE DRAWINGS

Embodiments of the invention will now be described with reference to the accompanying drawings, in which:
Figure 1 is a plan view of an aircraft;
Figure 2 is a plan view of an existing fuel line on a starboard wing;
Figure 3a is a side profile view of an existing pipe support;
Figure 3b is a front view of the existing pipe support of Figure 3a;
Figure 4 is a perspective view of an aircraft assembly including a pipe supported on a rib by a pipe support;
Figure 5 is perspective view of the pipe support shown in Figure 4;
Figure 6 is another perspective view of the pipe support of Figure 5, with the pipe support in a closed condition;
Figure 7 is another perspective view of the pipe support of Figure 5, with the pipe support in an open condition;
Figure 8 is a perspective view of the pipe support in the open condition with the pipe received therebetween;
Figure 9 is a perspective view of the pipe support in the closed condition with the pipe received in the pipe support;
Figure 10 is a perspective view of the pipe support in the closed condition with the pipe received in the pipe support prior to engagement of the pipe support with the rib;
Figure 11 is a perspective view of the pipe support in the closed condition with the pipe received in the pipe support with the pipe support received through the rib;
Figure 12 is a perspective view of the pipe support engaged with the rib;
Figure 13 is a rear view of the pipe support received through the rib;
Figure 14 is a rear view of the pipe support engaged with the rib;
Figure 15 is a cross-sectional view of the pipe support engaged with the rib; and
Figure 16 is a cross-sectional side view of the pipe support fixed in engagement with the rib.

### DETAILED DESCRIPTION OF EMBODIMENT(S)

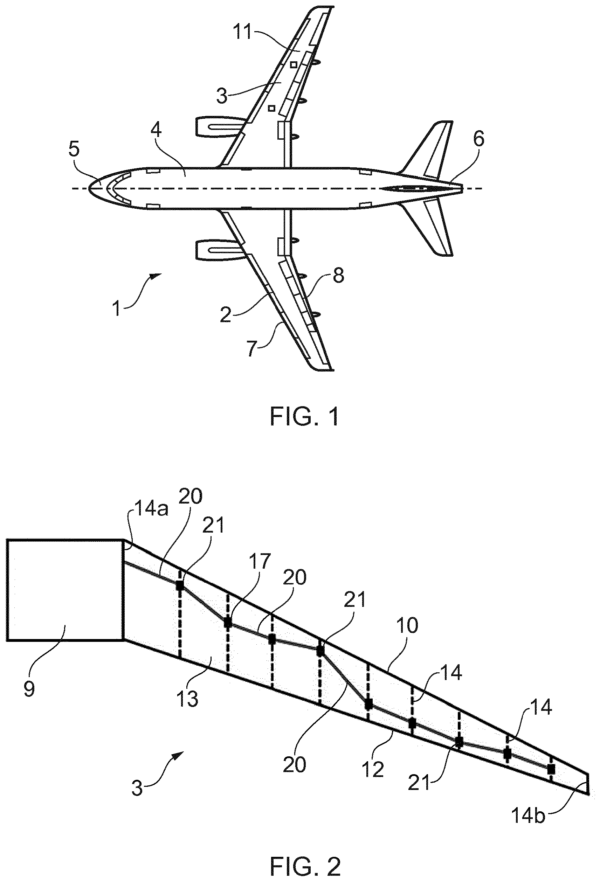

Figure 1 shows an existing aircraft 1 with port and starboard fixed wings 2, 3, a fuselage 4 with a nose end 5 and a tail end 6. The aircraft 1 is a typical jet passenger transonic transport aircraft but the invention is applicable to a wide variety of fixed wing aircraft types, including commercial, military, passenger, cargo, jet, propeller, general aviation, etc. with any number of engines attached to the wings or fuselage.

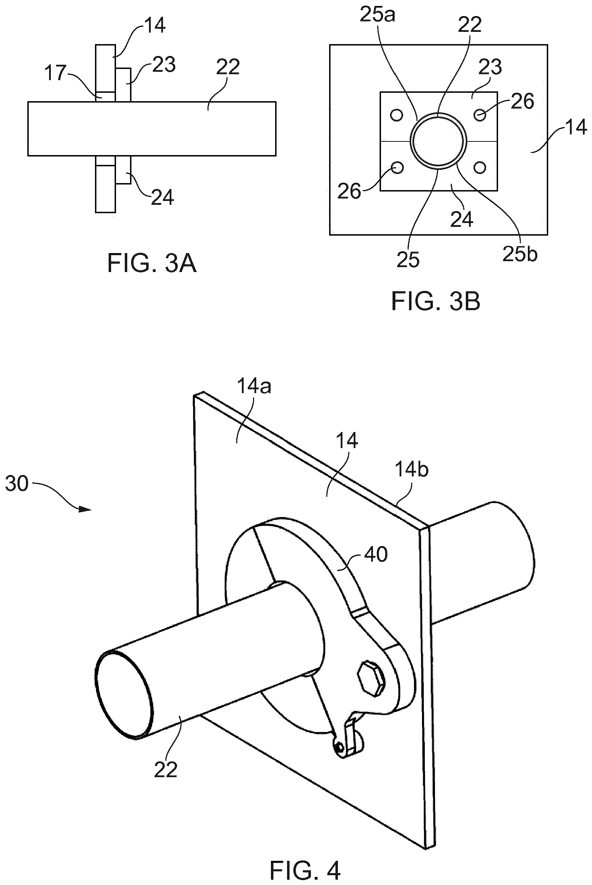

Each wing has a cantilevered structure with a length extending in a span-wise direction from a root to a tip, the root being joined to an aircraft fuselage 4. The wings 2, 3 are similar in construction so only the starboard wing 3 will be described in detail with reference to Figures 2 and 3A-3B.

The aircraft 1 includes a centre wing box 9 within the body of the fuselage 4. The centre wing box 9 is joined to an inboard rib 14a which forms the root of the wing 3. The wing 3 includes a series of spaced ribs 14 between the inboard rib 14a and an outboard rib 14b at the starboard wing tip. Each rib 14 defines a rib plane. The rib plane of each rib extends substantially parallel to the or each adjacent rib plane. The orientation of adjacent ribs with respect to each other may vary. The rib plane extends substantially parallel to a chord axis of the wing 3. The ribs 14 form part of a wing box on the starboard wing 3 the wing box 9 also including a front spar 10 and an upper skin cover 11, a rear spar 12, and a lower skin cover 13.

In the following description, the term "front" refers to components towards a leading edge 7 of the wing, and the term "rear" refers to components towards a trailing edge 8 of the wing. The terms "forward" and "rearward" shall be construed accordingly. The position of features may be construed relative to other features, for example a forward component may be disposed on a forward side of another component, but towards the rear of the vehicle. Similarly, the terms "upper" and "lower" refer to the position of features relative to other features and in accordance with a normal orientation of the aircraft 1.

In an existing wing box shown in Figures 2, a fuel line extends across multiple ribs. The fuel line extends through openings 17 positioned within the body of the rib 14, making it difficult to install the fuel line within the assembled wing box. As a result, the fuel line is formed from multiple short fuel pipe sections 20 that connect to adjacent fuel pipes 20 at the ribs 14 using pipe connectors 21 located at the ribs 14. The pipe connectors 21 are disposed on opposing sides of each rib 14 to surround the opening 17. The fuel line therefore extends across nine ribs 14 through openings 17, although the fuel line may extend across a different number of ribs 14. The pipe connectors 21 attach to the ribs 14 using fasteners (not shown). As such, the pipe connectors 21 act as pipe supports.

In an alternative arrangement of pipe supports, as shown in Figures 3A and 3B, a pipe 22, forming the fuel line, extends through each opening 17 in each rib 14. A pair of support plates 23, 24 define a support aperture 25. The support plates 23, 24 are located on opposing sides of the pipe 22 and each have a recess 25a, 25b in an edge to define the support aperture 25. The support plates 23, 24 are bolted to one side of the rib 14 with fixings 26 about the opening 17 to support the pipe 22 at the opening 17. The support plates 23, 24 support the pipe 22 to restrict movement in the rib plane direction.

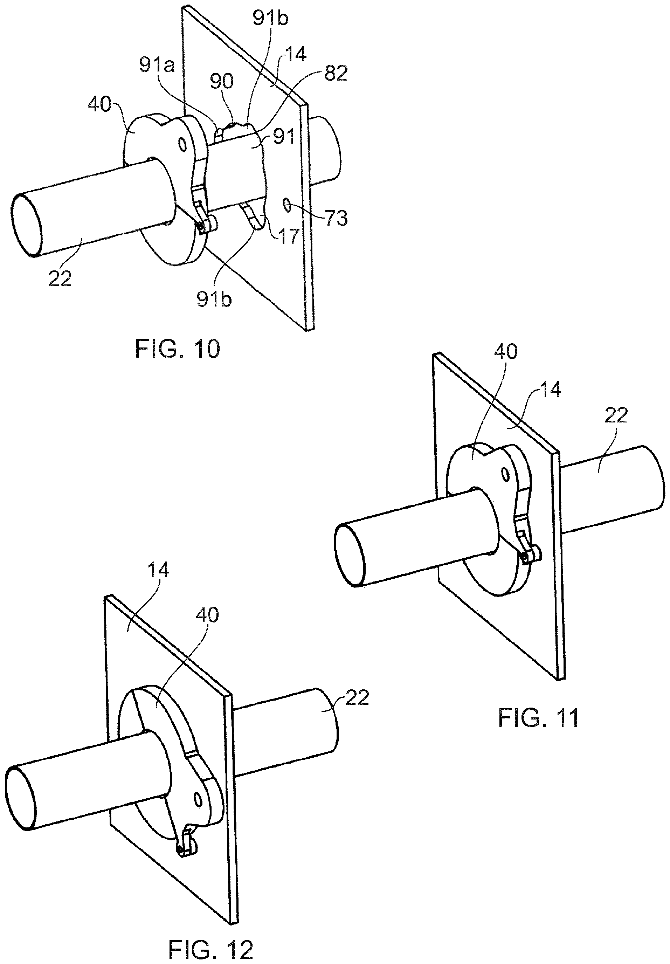

Figure 4 shows an aircraft assembly 30 in accordance with an embodiment of the invention. The aircraft assembly 30 shares many common features with the existing aircraft assembly shown in Figures 1-3 and so similar reference numerals are used to denote similar parts with the existing aircraft assembly. The pipe 22 extends through the opening 17 (refer to Figure 10) in the rib 14. The rib 14 defines a rib plane. The rib 14 has first and second rib faces 14a, 14b. The opening 17 extends between the first and second rib faces 14a, 14b.

The pipe 22 is a fluid pipe, such as a fuel pipe, a vent pipe or scavenge pipe. The pipe 22 may be configured to carry a liquid and/or a gas. The pipe 22 has a generally uniform cross-section along its length. This aids fluid flow, and restricts flow disturbances. The pipe 22 extends through the opening 17. The diameter of the pipe 22 is smaller than the peripheral dimensions of the opening 17.

A pipe support 40 mounts the pipe 22 in the region of the rib 14to the rib 14. The rib 14 acts as a structural member. The pipe support 40 restricts movement of the pipe 22 and helps to reduce chaffing. As will be described below, attaching the pipe 22 to the rib 14 using the pipe support 40 is a convenient means of assembling the pipe 22 across multiple ribs 14 without the need to divide the fluid pipe into multiple sections that individually transverse each rib bay. Instead the pipe 14 is provided in the one uninterrupted fluid pipe 14 that extends through multiple ribs 14. As such, the parts count and complexity of the assembly may be simplified.

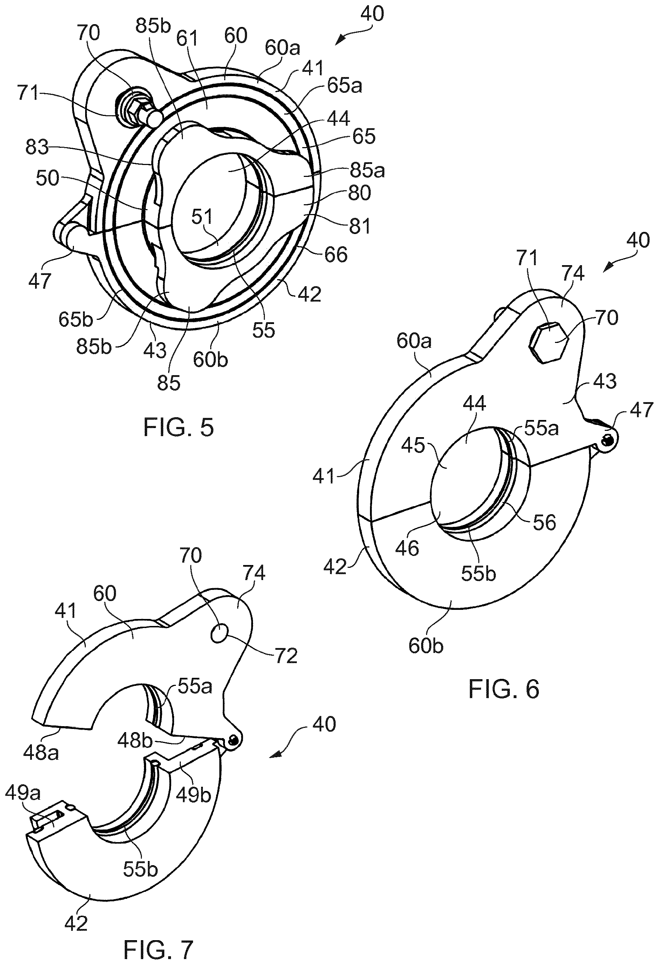

The pipe support 40 will now be described in detail with reference to Figures 5 to 7. The pipe support 40 has a first part 41 and a second part 42. The first and second parts 41, 42 form a body 43 of the pipe support 40. The first and second parts 41, 42 are separable. The first and second parts 41, 42 are moveable relative to each other between a closed condition, as shown in Figures 5 and 6, and an open condition, as shown in Figure 7. In the closed condition, as shown in Figures 5 and 6, the first and second parts 41, 42 are brought together. An aperture 44 is defined through the pipe support 40. The aperture 44 is configured to receive the pipe 22. The aperture 44 is defined by a first semi-circular channel 45 in the first part 41 and a second semi-circular channel 46 in the second part 42.

The first and second parts 41, 42 are connected by a hinge 47. The first and second parts 41, 42 are hingedly mounted to each other. The hinge 47 ensures alignment of the first and second parts 41, 42 when the pipe support 40 is moved into its closed condition. As such, the first and second semi-circular channels 45, 46 are aligned with each other to define the aperture 44. The hinge 47 is a pin pivot. Alternative hinge arrangements may be used. The pipe support 40 is formed as a clam-shell configuration. The hinge 47 is offset from the first and second parts 41, 42 to allow the pipe support 40 to move easily between the open and closed conditions.

The aperture 44 is configured to receive the pipe 22. As such, the diameter of the aperture 44 substantially corresponds to the outer diameter of the pipe 22. In embodiments, the diameter of the aperture 44 is slightly greater than the outer diameter of the pipe 22, for example to allow the pipe 22 to move during wing bending.

The pipe support 40 comprises a collar 50. The collar 50 is formed by the first and second parts 41, 42. The body 43 of the pipe support 40 is split into the first and second parts 41, 42 along a diametric plane along which the first and second parts 41, 42 are brought into abutment in the closed condition. The collar 50 has an internal face 51 defining the aperture 44. The aperture 44 is a bore through the collar. It will be understood that the collar 50 is separable along the diametric plane when the first and second parts 41, 42 are moved from the closed condition into the open condition, as shown in Figure 7. The first and second parts 41, 42 abut each other in the closed condition at first and second abutment ends 48a, 48b, 49a, 49b respectively.

A collar seal 55 extends around the aperture 44. The collar seal 55 protrudes from the collar internal face 51. The collar seal 55 is partially received in a collar seal channel 56 in the collar internal face 51. The collar seal 55 comprises a first collar seal portion 55a and a second collar seal portion 55b. The first and second collar seal portions 55a, 55b are on the first and second parts 41, 42 respectively. The collar seal 55 is separable into the two portions when the first and second parts 41, 42 are moved from the closed condition. The collar seal 55 forms a circumferentially extending sealing arrangement when the pipe support 40 is in the closed condition. The collar seal 55 is formed as a split O-ring arrangement, however alternative configurations are anticipated.

The body 43 of the pipe support 40 is formed from a conductive thermoplastic, for example a carbon fibre reinforced nylon. The collar seal 55 is formed from a conductive elastomeric material. The collar seal 55 is configured to directly contact the pipe 22 when the pipe 22 is received by the pipe support 40. By providing a conductive elastomeric seal it is possible to achieve an electrical bond between the pipe 22 and the pipe support 40 through the collar seal 55. When the first and second parts 41, 42 are moved into the closed condition with the pipe 22 received therebetween, the first and second parts 41, 42 are configured to clamp the pipe 22 in the aperture 44. The collar seal 55 is resilient and biases against the pipe 22.

The body 43 comprises a flange 60. The flange 60 is at one end of the collar 50. The flange 60 extends circumferentially around the collar 50. The flange 60 extends radially outwardly from the collar 50. The flange 60 is generally planar. The first and second parts 41, 42 together define the flange 60. The flange 60 comprises a first flange portion 60a and a second flange portion 60b. The hinge 47 extends between the first and second flange portions 60a, 60b. The flange 60 comprises a locating face 61. The locating face 61 is configured to be brought into abutment with the rib 14. The flange 60 restricts movement of the pipe support 40 relative to the rib 14 in an axial direction of the pipe 22.

The flange 60 comprises a flange seal 65. The flange seal 65 extends circumferentially. The flange seal 65 is configured to locate against one of the faces 14a, 14b of the rib to provide sealing thereagainst. The flange seal 65 is received in a flange channel 66. The flange channel 66 extends circumferentially around the locating face 61. The flange seal comprises a first flange seal portion 65a and a second flange seal portion 65b. The first and second flange seal portions 65a, 65b are on the first and second parts 41, 42 respectively. When the pipe support 40 is in the closed condition, the first and second flange seal portion 65a, 65b form a circumferentially extending seal.

The flange seal 65 is formed from a conductive elastomeric material. The flange seal 65 protrudes from the locating face 61. When the locating face 61 is brought into abutment with the rib 14, an electrical path is formed between the pipe 40 and the rib 14. As such it is possible to achieve an electrical bond between the pipe support 40 and the rib 14, through use of the pipe support 40 only. It is therefore possible to provide an electrical bond between the pipe 22 and the rib 14 through use of the pipe support 40 without the need for further components such as separate bonding leads.

A fixing 70 is provided. The fixing 70 is configured to fixedly locate the pipe support 40 with respect to the rib 14 and to prevent relative rotation of the pipe support 40 with the rib 14 when mounted thereto. In the present arrangement, the fixing comprises a nut and bolt arrangement 71, for example a self-retaining nut, acting as a threaded fastener configuration, which is receivable through a fixing hole 72 (as shown in Figure 7) and a corresponding locking hole 73 on the rib 14 (as shown in Figure 10). It will be understood that alternative fixing arrangements may be used, for example a biased member on the pipe support 40 which is locatable in the locking hole 73 on the rib 14. The fixing 70 is disposed on a protuberance74.

The pipe support 40 comprises a bayonet fitting 80. The bayonet fitting 80 comprises a male bayonet arrangement 81. The male bayonet arrangement 81 is on the collar 50. The male bayonet arrangement 81 is at the other end of the collar 50 to the flange 60. A rib receiving gap 83 is defined between the male bayonet arrangement 81 and the flange 60.

The bayonet fitting 80 comprises a plurality of bayonet tabs 85. The bayonet tabs 85 protrude from the collar 50. The bayonet tabs 85 extend radially outwardly from the collar 50. The bayonet tabs 85 include a first bayonet tab 85a and two second bayonet tabs 85b. It will be understood that the number of bayonet tabs 85 may differ. The first bayonet tab 85a has a different profile to the second bayonet tabs 85b. The first bayonet tab 85a is larger than the second bayonet tabs 85b. In the present arrangement the width of the first bayonet tab 85a is greater than the width of the second bayonet tabs 85b, although other dimensions may differ, such as the length of the respective bayonet tabs. It will be understood that the shape of the bayonet tabs 85 may differ from that shown.

The distance between the bayonet tabs 85 and the flange 60 substantially corresponds to the thickness of the rib 14 about the opening 17. The respective angular distance between the bayonet tabs 85 may differ. In the present configuration, as shown in the figures, the first bayonet tab 85a is split between the first and second parts 41, 42 with one second bayonet tab 85b being formed on each of the first and second parts 41, 42.

Referring now in particular to Figures 10, 13 and 14 the opening 17 acts as a female bayonet arrangement 82 of the bayonet fitting 80. The opening 17 has a profile substantially corresponding to the profile of the male bayonet arrangement 81. The opening 17 has an opening wall 90. The opening 17 has a radial profile with a minimum radial distance which is greater than the radius of the outer surface of the pipe 22. When the pipe 22 is received in the opening 17, the opening wall 90 is configured to be spaced from the pipe 22. The opening wall 90 is spaced from the pipe by the collar seal 55. The opening wall is configured to be spaced from the collar 50. The opening 17 has opening slots 91. The opening slots 91 extends from the opening wall 90. The opening slots generally correspond to the bayonet tabs 85. The opening slots 91 comprise a first opening slot 91a and two second opening slots 91b. The arrangement of the first and second opening slots 91a, 91b generally correspond to the arrangement of the first and second bayonet tabs 85a, 85b. The first and second bayonet tabs 85a, 85b are configured to be inserted through the first and second opening slots 91a, 91b when the pipe support 40 is aligned with an inserted into the opening 17. The radial extent of the opening slots 91 is less than the radius of the flange seal 65. The opening slots 91 extend between the first and second rib faces 14a, 14b of the rib 14.

The radius of the opening wall 90 is less than the radial extent of each of the bayonet tabs 85.

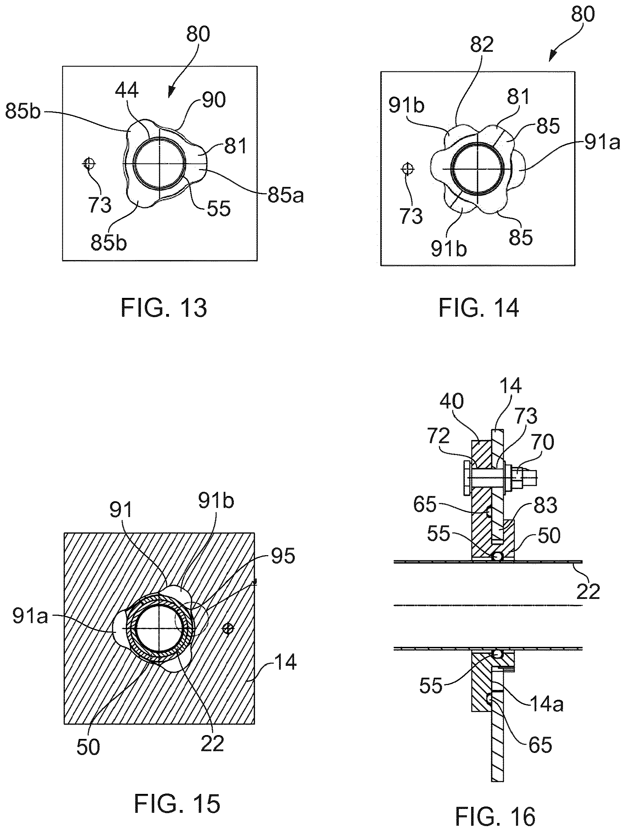

As shown in Figure 15, a stop 95 extends from the pipe support 40. The stop 95 is configured to abut against an edge of the opening to limit rotation of the pipe support 40 when the pipe support 40 is received by the opening 17. The stop 95 extends from the collar 50. In an alternative arrangement the stop 95 extends from one or both of the flange 60 and the male bayonet arrangement 81. The stop 95 is a protrusion. The stop 95 is configured to abut against an edge of one of the opening slots 91a, 91b as the pipe support 40 is moved into an engaged condition with the rib 14.

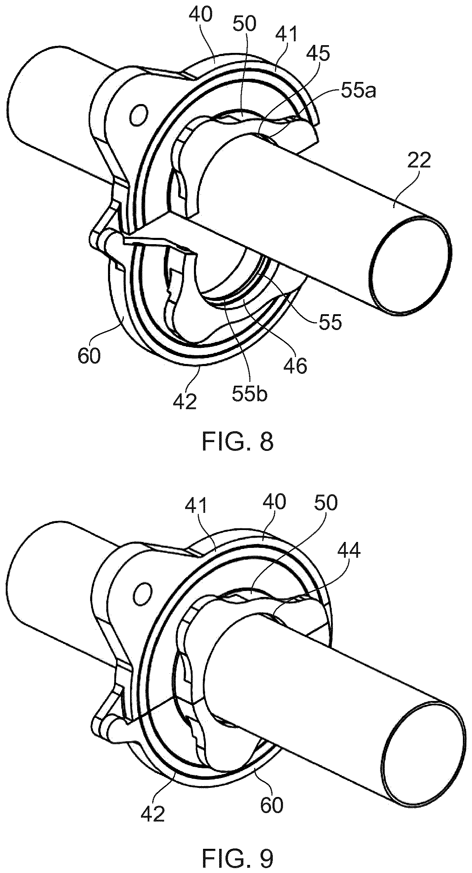

Assembly of the aircraft assembly 30 will now be described with reference to Figures 8 to 16.

The pipe 22 may be received by the pipe support 40 by holding the pipe support 40 in an open condition as shown in Figure 8 and placing the pipe support 40 over the pipe 22. In the open condition, the first and second parts 41, 42 are hinged apart from each other such that the pipe may be received therebetween. The pipe support 40 is moved over the pipe 22 to position the pipe 22 in the vicinity of the first and second semi-circular channels 45, 46 which together form the aperture 44. When the pipe support 40 and pipe 22 are in relative position with each other, the first and second parts 41, 42 are brought together. The pipe support 40 is therefore moved into its closed condition, as shown in Figure 9. By moving the support into the closed condition the pipe is clamped between the first and second parts 41, 42. The collar seal 55 locates against the outer surface of the pipe 22 to seal thereagainst. The first and second collar seal portions 55a, 55b together form a continuous seal around the pipe 22. It will be understood that an assembler may assemble the pipe support 40 with the pipe 22 via a one-handed operation. When the pipe support 40 is moved into the open condition it will be understood that the first and second parts 41, 42 are brought into abutment with each other. The pipe support 40 is free to move into the open condition. In the closed condition, the collar 50 is formed around the pipe 22, with the flange 60 extending from and around the pipe 22.

In Figures 10 to 12 the pipe support 40 is shown positioned relative to the rib 14 through which the pipe 22 extends. In Figure 10 the pipe support 40 is shown in an unengaged position. In Figures 11 and 13 the pipe support 40 is shown in an inserted position. In Figures 12, 13 and 15 the pipe support is shown in an engaged position. In Figure 16 the pipe support 40 is shown in a fixed condition.

The pipe support 40 is aligned with opening 17. The male bayonet arrangement 81 is aligned with the opening 17, acting as the female bayonet arrangement 82. That is the relative bayonet tabs 85 are aligned with the respective opening slots 91. The provision of the first bayonet tab 85a and the first opening slot 91a in which both have a different profile to the second bayonet tabs 85b and second opening slots 91b helps to ensure that the pipe support 40 is correctly aligned with the opening 17. In particular, such an arrangement helps to ensure that the fixing hole 72 aligns with the locking hole 73 when the pipe support 40 is in the engaged position with the rib 14.

When the male and female bayonet arrangements 81, 82 are aligned the collar 50 is inserted into the opening 17. The collar 50 is therefore disposed in the opening 17. The collar 50 extends through the opening 17. As such, the rib 14 is disposed between the bayonet tabs 85 and the flange 60. The rib receiving gap 83 corresponds to the thickness of the rib 14 about the opening 17. As such, the pipe support 40 is able to be rotated about the pipe 22 and relative to the rib 14 so that at least a portion of the rib 14 is received in the rib receiving gap 83 between the flange 60 and the bayonet tabs 85.

When the pipe support 40 is received by the opening 17, the first and second parts 41, 42 are restricted from being separable from each other. As such, the pipe support 40 is retained in the closed condition without the need for any additional components, such as fixings. The rib 14 itself acts to maintain the pipe support 40 in the closed condition. As such, the provision of a pipe support is simplified.

The pipe support 40 may then be rotated about the pipe 22 to move the pipe support 40 into the engaged position with the rib 14. As shown in Figure 14, the bayonet tabs 85 are moved out of alignment with the opening slots 91. When the pipe support 40 is moved into the engaged position, movement of the pipe support 40 relative to the rib 14 in the longitudinal axis direction of the pipe 22 is prevented. Rotation of the pipe support 40 is limited by the stop 95. The stop 95 abuts against an edge of one of the opening slots 91 to limit movement. In such a position, the stop 95 ensures alignment of the fixing hole 72 with the locking hole 73.

When the fixing hole 72 is aligned with the locking hole 73, the fixing 70 may be engaged to lock the pipe support 40. When the fixing 70 is engaged, relative rotation of the pipe support 40 with the rib 14 is prevented. As such, it is not possible to move the pipe support 40 from the engaged position, so that the pipe support 40 is in a locked condition as shown in Figure 16. It is therefore possible to use a single fixing to ensure a locked engagement of the pipe with the rib by a pipe support.

Referring to Figure 16, when the pipe support 40 is in the engaged position the pipe 22 is supported at the rib 14. The pipe 22 is also securely held and spaced from the rib 14. The collar seal 55 is biased against the outer surface of the pipe 22. The collar seal 55 is therefore in abutment with the pipe 22 to securely locate the pipe 22 with the pipe support 40. As the collar seal 55 is electrically conductive, an electrical bond is formed between the pipe 22 and the pipe support 40. The collar seal 55 provides an internal fluid seal to prevent fluid leakage through the opening 17 by providing a fluid seal between the pipe 22 and the pipe support 40.

When the pipe support 40 is in the engaged position, the flange 60 abuts the first rib face 14a of the rib 14. The flange seal 65 is biased against the rib 14. As the flange seal is electrically conductive, the pipe support 40 and the rib 14 are electrically bonded to each other. The flange seal provides an external seal to prevent fluid leakage through the opening 17. The flange seal 60 prevents leakage between the rib 14 and the pipe support 40. Through the provision of the collar seal 55 and the flange seal 65 it is possible to maximise the sealing capability provided by the pipe support 40. The pipe support 40 restricts the fluid path across the rib 14 through the openings 17.

Although in the above described embodiments the collar seal 55 and the flange seal 65 are electrically conductive, it will be understood that one or more of the seals 55, 65 and the pipe support 40 may be formed from an electrically insulating material to prevent the provision of an electrical path between the rib 14 acting as a structural member, and the pipe 22.

It will be understood that the aircraft assembly may be disassembled by disengaging the fixing 70 and rotating the pipe support 40 from the engaged position to the inserted positon. As such, the pipe support 40 may then be withdrawn from the rib 14. As such, the pipe support 40 is replaceable or interchangeable.

Although the invention has been described above with reference to one or more preferred embodiments, it will be appreciated that various changes or modifications may be made without departing from the scope of the invention as defined in the appended claims.

## Claims

1. An aircraft assembly comprising:
a fluid pipe (22),
a wing rib (14) defining a rib plane and having an opening (17), wherein the fluid pipe (22) extends through the rib plane and through the opening (17), and
a pipe support (40) comprising
a first part (41) and a second part (42) which together form a collar (50) configured to retain the pipe (22),
the pipe support (40) being movable between an open condition, in which the pipe (22) is insertable between the first and second parts (41, 42), and a closed condition, in which the first and second parts (41, 42) are brought together to retain the pipe (22), and **characterised in that**:
at least part of the collar (50) is disposed in the opening (17) in the wing rib (14) so that the pipe support (40) is restricted from moving from the closed condition, and
wherein the pipe support (40) supports the fluid pipe (22) in the opening (17).

2. The aircraft assembly of claim 1, comprising a flange (60) on the collar (50).

3. The aircraft assembly of claim 1 or claim 2, wherein the pipe support (40) comprises a bayonet fitting (80).

4. The aircraft assembly of claim 3, wherein the bayonet fitting (80) comprises a bayonet tab (85) configured to be inserted through a corresponding slot (91) of the opening (17) in the wing rib (14), and to abut against the wing rib (14) upon rotation of the pipe support (40) when the at least part of the collar (50) is in the opening (17), so that a portion of the wing rib (14) is engaged between the flange (60) and the bayonet tab (85).

5. The aircraft assembly of claim 4, wherein the bayonet tab is a first bayonet tab (85a), and the bayonet fitting (80) comprises at least one second bayonet tab (85b), the first bayonet tab (85a) having a different profile to the at least one second bayonet tab (85b).

6. The aircraft assembly of any of claims 2 to 5, comprising a flange seal (65) on the flange (60).

7. The aircraft assembly of claim 6, wherein the flange seal (65) is electrically conductive to provide a conductive path between the pipe support (40) and the wing rib (14).

8. The aircraft assembly of any preceding claim, comprising a collar seal (55) on the collar (50).

9. The aircraft assembly of claim 8, wherein the collar seal (55) is electrically conductive to provide a conductive path between the pipe (22) and the pipe support (40).

10. The aircraft assembly of any preceding claim, comprising a stop (95) configured to limit rotation of the at least part of the collar (50) in the opening (17).

11. The aircraft assembly of any preceding claim, comprising a fixing (70) configured to fix the pipe support (40) with the wing rib (14) to prevent rotation of the pipe support (40) in the opening (17) when the at least part of the collar is in the opening (17).

12. A fixed wing aircraft (1) comprising the aircraft assembly of any of claims 1 to 11.

13. A method of supporting a pipe (22) on a wing rib (14) of an aircraft (1), the method comprising the steps:
disposing a pipe (22) through an opening (17) in the wing rib (14),
inserting the pipe (22) between a first part (41) and a second part (42) of a pipe support (40) in an open condition,
moving the pipe support (40) into a closed condition in which the first and second parts (41, 42) are brought together to form a collar (50) with the pipe (22) retained by the collar (50), and **characterised by**
disposing the collar (50) in the opening (17) in the wing rib (1) so that the first and second parts (41, 42) are restricted from moving from the closed condition.

## Patentansprüche

1. Flugzeuganordnung, umfassend:
ein Fluidrohr (22),
einen Flügelspant (14), der eine Spantebene definiert und eine Öffnung (17) aufweist, wobei sich das Fluidrohr (22) durch die Spantebene und durch die Öffnung (17) erstreckt, und
eine Rohrhalterung (40), umfassend:
einen ersten Teil (41) und einen zweiten Teil (42), die zusammen eine Manschette (50) bilden, die dazu beschaffen ist, das Rohr (22) zu halten,
wobei die Rohrhalterung (40) zwischen einem offenen Zustand, in dem das Rohr (22) zwischen das erste und das zweite Teil (41, 42) einführbar ist, und einem geschlossenen Zustand, in dem das erste und das zweite Teil (41, 42) zusammengebracht sind, um das Rohr (22) zu halten, beweglich ist, und **dadurch gekennzeichnet, dass**:
wenigstens ein Teil der Manschette (50) in der Öffnung (17) im Flügel spant (14) angeordnet ist, so dass die Rohrhalterung (40) daran gehindert wird, sich aus dem geschlossenen Zustand zu bewegen, und
wobei die Rohrhalterung (40) das Fluidrohr (22) in der Öffnung (17) hält.

2. Flugzeuganordnung nach Anspruch 1, umfassend einen Flansch (60) an der Manschette (50).

3. Flugzeuganordnung nach Anspruch 1 oder Anspruch 2, wobei die Rohrhalterung (40) einen Bajonettverschluss (80) umfasst.

4. Flugzeuganordnung nach Anspruch 3, wobei der Bajonettverschluss (80) eine Bajonettnase (85) umfasst, die dazu beschaffen ist, durch einen entsprechenden Schlitz (91) der Öffnung (17) in dem Flügelspant (14) eingeführt zu werden und bei Drehung der Rohrhalterung (40) an dem Flügelspant (14) anzuliegen, wenn sich wenigstens ein Teil der Manschette (50) in der Öffnung (17) befindet, so dass ein Abschnitt des Flügelspants (14) zwischen dem Flansch (60) und der Bajonettnase (85) in Eingriff kommt.

5. Flugzeuganordnung nach Anspruch 4, wobei die Bajonettnase eine erste Bajonettnase (85a) ist und der Bajonettverschluss (80) wenigstens eine zweite Bajonettnase (85b) umfasst, wobei die erste Bajonettnase (85a) ein anderes Profil als die wenigstens eine zweite Bajonettnase (85b) aufweist.

6. Flugzeuganordnung nach einem der Ansprüche 2 bis 5, umfassend eine Flanschdichtung (65) an dem Flansch (60).

7. Flugzeuganordnung nach Anspruch 6, wobei die Flanschdichtung (65) elektrisch leitfähig ist, so dass ein Leitungspfad zwischen der Rohrhalterung (40) und dem Flügelspant (14) bereitgestellt wird.

8. Flugzeuganordnung nach einem der vorherigen Ansprüche, umfassend eine Manschettendichtung (55) an der Manschette (50).

9. Flugzeuganordnung nach Anspruch 8, wobei die Manschettendichtung (55) elektrisch leitfähig ist, so dass ein Leitungspfad zwischen dem Rohr (22) und der Rohrhalterung (40) bereitgestellt wird.

10. Flugzeuganordnung nach einem der vorherigen Ansprüche, umfassend einen Anschlag (95), der dazu beschaffen ist, die Drehung des wenigstens einen Teils der Manschette (50) in der Öffnung (17) zu begrenzen.

11. Flugzeuganordnung nach einem der vorherigen Ansprüche, umfassend eine Befestigung (70), die dazu beschaffen ist, die Rohrhalterung (40) mit dem Flügelspant (14) zu befestigen, um eine Drehung der Rohrhalterung (40) in der Öffnung (17) zu verhindern, wenn sich der wenigstens eine Teil der Manschette (50) in der Öffnung (17) befindet.

12. Starrflügelflugzeug (1), umfassend die Flugzeuganordnung nach einem der Ansprüche 1 bis 11.

13. Verfahren zum Halten eines Rohrs (22) an einem Flügelspant (14) eines Flugzeugs (1), das Verfahren umfassend die Schritte:
Anordnen eines Rohres (22) durch eine Öffnung (17) im Flügelspant (14),
Einführen des Rohrs (22) zwischen einem ersten Teil (41) und einem zweiten Teil (42) einer Rohrhalterung (40) in einem geöffneten Zustand,
Bewegen der Rohrhalterung (40) in einen geschlossenen Zustand, in dem das erste und das zweite Teil (41, 42) zusammengebracht sind, so dass sie eine Manschette (50) bilden, wobei das Rohr (22) durch die Manschette (50) gehalten wird, und **gekennzeichnet durch**
Anordnen der Manschette (50) in der Öffnung (17) in dem Flügelspant (14), so dass der erste und der zweite Teil (41, 42) daran gehindert werden, sich aus dem geschlossenen Zustand zu bewegen.

## Revendications

1. Ensemble aéronef comprenant :
un tuyau de fluide (22),
une nervure d'aile (14) définissant un plan de nervure et ayant une ouverture (17), le tuyau de fluide (22) s'étendant à travers le plan de nervure et à travers l'ouverture (17), et
un support de tuyau (40) comprenant
une première partie (41) et une seconde partie (42) qui forment ensemble un collier (50) configuré pour retenir le tuyau (22),
le support de tuyau (40) étant mobile entre un état ouvert, dans lequel le tuyau (22) peut être inséré entre la première et la seconde partie (41, 42), et un état fermé, dans lequel la première et la seconde partie (41, 42) sont réunies pour retenir le tuyau (22), et **caractérisé en ce que** :
au moins une partie du collier (50) est disposée dans l'ouverture (17) dans la nervure d'aile (14) de sorte que le support de tuyau (40) ne peut pas quitter l'état fermé, et
le support de tuyau (40) supporte le tuyau de fluide (22) dans l'ouverture (17).

2. Ensemble aéronef suivant la revendication 1, ledit ensemble aéronef comprenant une bride (60) sur le collier (50).

3. Ensemble aéronef suivant la revendication 1 ou 2, dans lequel le support de tuyau (40) comprend une fermeture à baïonnette (80).

4. Ensemble aéronef suivant la revendication 3, dans lequel la fermeture à baïonnette (80) comprend une patte à baïonnette (85) configurée pour être insérée à travers une fente correspondante (91) de l'ouverture (17) dans la nervure d'aile (14) et buter contre la nervure d'aile (14) sur rotation du support de tuyau (40) lorsqu'au moins une partie du collier (50) est dans l'ouverture (17) de sorte qu'une partie de la nervure d'aile (14) est prise entre la bride (60) et la patte à baïonnette (85).

5. Ensemble aéronef suivant la revendication 4, dans lequel la patte à baïonnette est une première patte à baïonnette (85a) et la fermeture à baïonnette (80) comprend au moins une seconde patte à baïonnette (85b), la première patte à baïonnette (85a) ayant un profil différent de l'au moins une seconde patte à baïonnette (85b).

6. Ensemble aéronef suivant la revendication 2 à 5, ledit ensemble aéronef comprenant une garniture étanche de bride (65) sur la bride (60).

7. Ensemble aéronef suivant la revendication 6, dans lequel la garniture étanche de bride (65) est électro-conductrice pour réaliser un trajet conducteur entre le support de tuyau (40) et la nervure d'aile (14).

8. Ensemble aéronef suivant une des revendications précédentes, l'ensemble aéronef comprenant une garniture étanche de collier (55) sur le collier (50).

9. Ensemble aéronef suivant la revendication 8, dans lequel la garniture étanche de collier (55) est électro-conductrice pour réaliser un trajet conducteur entre le tuyau (22) et le support de tuyau (40).

10. Ensemble aéronef suivant une des revendications précédentes, ledit ensemble aéronef comprenant une butée (95) configurée pour limiter la rotation de l'au moins une partie du collier (50) dans l'ouverture (17).

11. Ensemble aéronef suivant une des revendications précédentes, ledit ensemble aéronef comprenant une fixation (70) configurée pour fixer le support de tuyau (40) avec la nervure d'aile (14) afin d'empêcher la rotation du support de tuyau (40) dans l'ouverture (17) lorsque l'au moins une partie du collier est dans l'ouverture (17).

12. Aéronef à voilure fixe (1) comprenant l'ensemble aéronef suivant une des revendications 1 à 11.

13. Procédé pour supporter un tuyau (22) sur une nervure d'aile (14) d'un aéronef (1), ledit procédé comprenant les étapes suivantes consistant à :
disposer un tuyau (22) à travers une ouverture (17) dans la nervure d'aile (14),
insérer le tuyau (22) entre une première partie (41) et une seconde partie (42) d'un support de tuyau (40) en état ouvert,
déplacer le support de tuyau (40) en un état fermé, dans lequel la première et la seconde partie (41, 42) sont réunies pour former un collier (50) avec le tuyau (22) retenu par le collier (50) et **caractérisé en ce que**
le collier (50) est disposé dans l'ouverture (17) dans la nervure d'aile (1) de sorte que la première et la seconde partie (41, 42) ne peuvent pas quitter l'état fermé.
